**Europäisches Patentamt**

**European Patent Office**

**Office européen des brevets**

(11) Veröffentlichungsnummer: **0 148 726**
**A2**

## EUROPÄISCHE PATENTANMELDUNG

(21) Anmeldenummer: 84810572.2

(22) Anmeldetag: 23.11.84

(51) Int. Cl.⁴: **A 46 D 1/00**
// A46B1/00, A46B7/04

(30) Priorität: 24.11.83 JP 221357/83

(43) Veröffentlichungstag der Anmeldung: 17.07.85
Patentblatt 85/29

(84) Benannte Vertragsstaaten: CH DE FR GB IT LI NL SE

(71) Anmelder: Identoflex AG, Postfach 227, CH-9470 Buchs (CH)

(72) Erfinder: Jarby, Sven, Rheinauerstrasse 1, CH-9470 Buchs (CH)

(74) Vertreter: White, William et al, PATENTANWALTS-BUREAU ISLER AG Postfach 6940 Walchestrasse 23, CH-8023 Zürich (CH)

(54) Gerät zum Reinigen von Zähnen und zum Entfernen von Flecken, Ablagerungen und Zahnstein.

(57) Das Gerät hat die Form einer Zahnbürste mit einem Griffteil (3) und einem daran befestigten Kopfteil (1). Der Kopfteil (1) besteht aus einem Bindemittel, allenfalls ein elastisches Material, das Schleifpartikeln enthält. Damit lassen sich Flecken an den Zähnen, Ablagerungen und/oder Zahnstein entfernen, die mit den herkömmlichen Zahnbürsten nicht entfernbar sind.

EP 0 148 726 A2

## Gerät zum Reinigen von Zähnen und zum Entfernen von Flecken, Ablagerungen und Zahnstein

Die Erfindung betrifft ein Gerät zum Reinigen von Zähnen und zum Entfernen von Flecken, Ablagerungen und Zahnstein und sie ist dadurch gekennzeichnet, dass das Gerät ähnlich einer Zahnbürste mit einem Griffteil und einem Kopfteil aus einem Schleifpartikeln enthaltenden Bindemittel, insbesondere einem elastischen Bindemittel besteht.

Gemäss einer weiteren Ausbildung kann dem Bindemittel ein aromatischer Stoff zugegeben sein.

Besonders vorteilhafte Ausführungsformen der Erfindung werden nachfolgend anhand der Zeichnung erläutert. Es zeigen:

Fig. 1    eine Frontansicht einer ersten Ausführungsform der Erfindung,

Fig. 2    eine Schnittansicht einer weiteren Ausführungsform der Erfindung, und

- 2 -

Fig. 3    eine Schnittansicht einer dritten Ausführungsform der Erfindung.


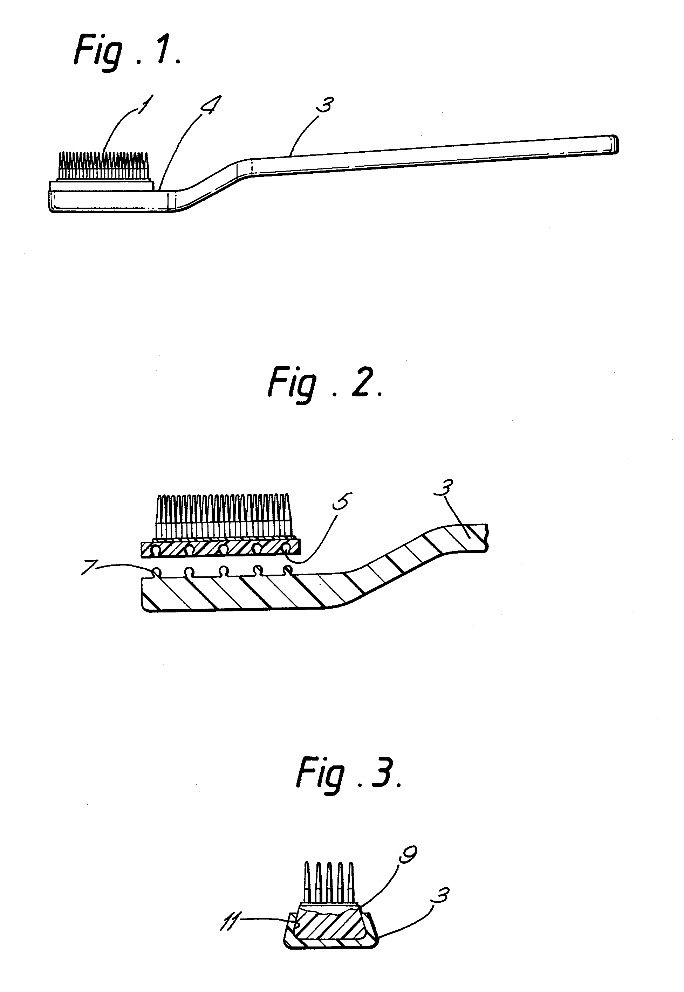

Das Gerät gemäss Fig. 1 hat eine zahnbürstenähnliche Ausbildung mit einem Griffteil 3, an dem einstückig ein Halter mit einer flachen Partie 4 für den Kopfteil 1 angeformt ist.

Der Kopfteil 1 besteht aus einem Bindemittel, wie beispielsweise Silikonkautschuk, das Schleifpartikeln, wie Bimsstein, Aluminiumoxid, Zirkoniumoxid, Siliziumkarbid oder Kalziumphosphat usw. enthält. Damit können Verunreinigungen an den Zähnen, wie Flecken, Ablagerungen und Zahnstein durch ein Gerät nach der Erfindung wirkungsvoll entfernt werden und die Zähne können gereinigt werden. Zudem können aromatische Stoffe wie beispielsweise Pfefferminzöl oder Menthol oder besonders von Kindern bevorzugte aromatische Stoffe dem Bindemittel zugemischt werden.


In dieser ersten Ausführungsform ist der Kopfteil 1 mittels eines Klebers auf der flachen Partie 4 des Griffteils 3 befestigt, so dass das Gerät angenähert einer herkömmlichen Zahnbürste gleicht.


In einer andern Ausführungsform nach Fig. 2 sind in der Bodenpartie des Kopfteils 1 Ausnehmungen 5 vorhanden. Entsprechend sind auf der flachen Partie 4 des Griffteils 3

- 3 -

Vorsprünge 7 ausgebildet. Durch Einschnappen der Vorsprünge 7 in den Ausnehmungen 5 wird der Kopfteil 1 auf der flachen Partie 4 des Griffteils 3 lösbar befestigt.

In der in Fig. 3 dargestellten Ausführungsform ist in der flachen Partie 4 des Griffteils 3 eine Längsnut 11 ausgebildet. Im Querschnitt hat diese Nut 11 nach oben konvergierende Seitenwände und hat damit wenigstens angenähert eine gleiche Form wie die Basis 9 des Kopfteils 1. Durch Einschieben der Basis 9 in die Nut 11 wird der Kopfteil 1 entfernbar auf dem Griffteil 3 befestigt.

Das Gerät gemäss der Erfindung kann infolge der Schleifeigenschaften die Zähne reinigen und Ablagerungen, Flecken und Zahnstein entfernen, die sonst mit herkömmlichen Zahnbürsten nicht entfernt werden konnten. Vorzugsweise sollte die Reinigung der Zähne einmal pro Woche erfolgen, weil eine übermässige Reinigung die Oberfläche der Zähne beschädigen könnte.

IDENTOFLEX AG
CH-9470 Buchs

P a t e n t a n s p r ü c h e

1.      Gerät zum Reinigen von Zähnen und zum Entfernen von Flecken, Ablagerungen und von Zahnstein von Zahnoberflächen, dadurch gekennzeichnet, dass es ähnlich einer Zahnbürste mit einem Griffteil und einem Kopfteil aus einem Schleifpartikeln enthaltenden Bindemittel insbesondere einem elastischen Bindemittel versehen ist.

2.      Gerät nach Patentanspruch 1, dadurch gekennzeichnet, dass das Bindemittel Silikonkautschuk ist.

3.      Gerät nach Patentanspruch 1, dadurch gekennzeichnet, dass die Schleifpartikeln aus Bimsstein, Aluminiumoxid, Zirkoniumoxid, Siliziumkarbid oder Kalziumphosphat bestehen.

4.      Gerät nach einem der vorangehenden Patentansprüche 1 bis 3, dadurch gekennzeichnet, dass das Bindemittel einen aromatischen Stoff enthält.

5. Gerät nach Patentanspruch 4, dadurch gekennzeichnet, dass der aromatische Stoff Pfefferminzöl der Menthol ist.

1/1

**Fig . 1.**

**Fig . 2.**

**Fig . 3.**

0148726